# EUROPEAN PATENT APPLICATION

(11) **EP 2 471 595 A1**
(43) Date of publication of application: **04.07.2012**
(21) Application number: 10425402.4
(22) Date of filing: 30.12.2010
(51) Int. Cl.: B01J 20/04, B01J 20/06, B01J 20/26, C08B 37/00

(54) **Adsorbent material**

(71) Applicant: Propack S.p.A., 10098 Rivoli, (Torino) (IT)
(72) Inventor: Vaula, Dante , Propack S.p.A, 10098 Rivoli (IT); Trotta, Francesco ,, 10125 Torino (IT)
(74) Representative: Plebani, Rinaldo

(57) **Abstract**

Adsorbent material comprising a carbohydrate nanosponge and at least an hygroscopic material, in particular selected from the group consisting chlorides, nitrates, sulphates, oxides and hydroxides, in particular calcium chloride. Moreover, an adsorbent system comprising the adsorbent material is disclosed.

## Description

The present invention relates to an absorbent material, to an absorbent system containing the same and to their use, in particular for removing water or moisture in the environment for example in containers, boxes and packages.

Moisture presents a serious threat to product integrity in a variety of industries, including electrical engineering and electronics.

Fungus, mildew, odors, discoloration and product deterioration are just a few of the damaging consequences of moisture contamination.

It is commonly known the use of desiccants to protect products through a process called adsorption. During adsorption, moisture is held inside a desiccant by physical and chemical bonds, such as Van der Waals interaction; no chemical change takes place. Along with protecting products from external elements, a certain amount of moisture inherent in all hygroscopic items can also be trapped within packages. Desiccants adsorb this moisture quickly and thoroughly, preventing condensation during transport and storage.

Almost all kind of industries in Europe use desiccant bags to protect their goods during storage and transportation.

Typically available desiccants are silica gel, activated clay and hygroscopic salts.

Silica gel is a non-toxic, non-corrosive form of silicon dioxide synthesized from sodium silicate and sulfuric acid and processed into granular or beaded form. Its active interconnected pores form a vast surface area that attracts and hold water through adsorption and capillary condensation, allowing it to adsorb up to 25% of its weight in water vapor. While silica gel works most effectively at room temperature and high humidity levels, its potency is somewhat diminished at humidity levels below 30%. Moreover, a large amount of silica gel is needed with respect of the moisture adsorbed.

Activated clay (montmorillonite and bentonite clay), a natural occurring, non-hazardous sulfur-free substance, is the most widely used desiccant material. The less expensive of available desiccant materials, the layered structure of activated clay attracts and adsorbs moisture onto its surface and between its layers. Activated clays can adsorb from 15% to 22% of their weight in moisture. Unfortunately, these originate from not renewable resources.

Hygroscopic salts, such as sodium, potassium, or calcium crystalline hydrated aluminosilicates or chlorides, contain a uniform network of crystalline pores and empty adsorption cavities. Since they are synthetic, their pore size can be controlled in the manufacturing process, allowing for a large range of adsorptive capabilities in the finished product. These salts can perform even better than bentonite, silica and zeolite (up to 200% of their weight in moisture), but some of them, such as calcium chloride, become deliquescent during the adsorption process resulting in staining or corrosion of the products in contact with them. In particular, calcium oxide, when in contact with moisture releases highly corrosive hydroxyl ions.

The aim of the present invention is therefore to find novel adsorbent materials that are free from the above described drawbacks. In particular, it is aim of the present invention to provide a novel adsorbent material able to increase the amount of water or moisture adsorbed from the environment with respect to bentonite and silica gel without encountering deliquescence.

It is a further aim of the present invention to provide for an adsorbent material with a reduced weight with respect to the amount of water and moisture adsorbed to significantly reduce also volumes and weights of the final packaging, and consequently further reducing transport volumes.

Moreover, it is a further aim of the present invention to provide for an adsorbent material that avoids typical deliquescing phenomena and oxidation and/or corrion caused by the use of hygroscopic salts.

According to the present invention it is provided an absorbent material according to claim 1, an adsorbent system according to claim 13 and their uses according to claims 14 and 15.

According to a first aspect of present invention, an absorbent material comprising a carbohydrate nanosponge and at least one hygroscopic material is provided.

By the term "carbohydrate nanosponge" is meant a porous highly-crosslinked polymers obtained by polymerization of a carbohydrate selected from the group consisting of dextrins, cellulose and starch with suitable linking agents.

By the term "hygroscopic material" is meant any material attracting or absorbing moisture from the surrounding environment.

In particular, dextrins are selected from the group consisting of linear dextrins and cyclodextrins.

Dextrins are a group of low-molecular-weight carbohydrates produced by the hydrolysis of starch or glycogen. Dextrins are mixtures of polymers of D-glucose units linked by α-(1,4) or α- (1,6) glycosidic bonds.

Cyclodextrins (CDs) are cyclic, non-reducing oligosaccharides characterized by a typical toroidal cone shape. The atom arrangement in the space is such that the inside cavity is lipophilic, while the outside of the torus is highly hydrophilic. As a consequence, CDs are able to form stable inclusion complexes with organic molecules of suitable polarity and size even in aqueous solution.

Suitable linear dextrins are dextrin 10 and dextrin 20.

Suitable cyclodextrins are selected from the group consisting of α-, β-, and γ-cyclodextrin, particularly β-cyclodextrin.

Suitable linking agents to be used for the preparation of the nanosponges are carbonyldiimidazole, triphosgene, diphenylcarbonate, pyromellitic anhydride, di- and poly-isocyanates, bis-acrylamides, carboxylic acid chlorides and dialdehydes.

In particular, the linking agent is pyromellitic anhydride.

Preferably, the molar ratio between carbohydrates and the linking agent used in the preparation of the nanosponge is between 2 and 16, more preferably between 4 and 8.

The nanosponges are mixed with at least an hygroscopic material selected from the group consisting of chlorides, nitrates, sulphates, oxides and hydroxides, in particular from the group consisting of calcium chloride, magnesium chloride, ferric chloride, copper chloride, calcium oxide, zinc oxide, sodium hydroxide, potassium hydroxide, calcium hydroxide, calcium nitrate, copper nitrate, zinc nitrate, magnesium nitrate, potassium nitrate, magnesium sulphate, sodium sulphate, calcium sulphate and ammonium sulphate, more in particular calcium chloride, magnesium chloride, ferric chloride, magnesium nitrate, magnesium sulphate, sodium hydroxide, potassium hydroxide and calcium oxide.

In one embodiment of the invention the hygroscopic material is calcium chloride.

Preferably the weight ratio of the nanosponge with respect to the hygroscopic material is between 1:8 and 8:1 more preferably is 1:1.

The adsorbent material according to the invention can be in the form of powders, granulates, microparticles, nanoparticles, tablets, gels, pastes or colloids.

Advantageously, the adsorbent material shows an increase in the percentage of moisture or water adsorbed with respect of their weight when compared to silica gel and bentonite. Moreover, the adsorbent material avoid deliquescence typical of hygroscopic materials maintaining its solid consistency and thus reducing the need of isolating it from the packaged goods. Further, the complexation of the hygroscopic salt with the carbohydrate nanosponge allows neutralization of corrosive anions further preserving from corrosion the goods in proximity of the adsorbent material.

In a further aspect of the invention it is provided an adsorbent system comprising the adsorbent material. In particular, the adsorbent material can be put in a container, such as a plastic box, that can be used to adsorb moisture in the environment. Alternatively, the adsorbent system may be realized for example in the form of bags filled with the adsorbent material.

In particular, the polymeric film is selected from the group consisting of mater Bi films, polyamidic films, polythene-coated films and nonwoven tissue.

The adsorbent material and the corresponding adsorbent system can be used for adsorbing water or moisture in the environment, for example in containers, boxes and packages.

Alternatively, the adsorbent material can be used as additive in the production of packaging materials, such as cardboard and plastic films.

Further characteristics of the present invention will emerge from the ensuing description of some non-limiting examples provided merely by way of illustration.

### Examples

### Example 1

1.135 g of β-cyclodextrin are dissolved in 10 mL of anidrous dimethylformamide (DMF). Subsequently 1.297 g of carbonyldiimidazole (CDI) are introduced and the solution reacts for 4 h at 100°C.

The solution is then cooled at room temperature and a large excess of deionized water is added.

The solution is then filtered under vacuum and the nanosponge thus obtained is recovered.

A solution of CaCl₂ in water is then mixed with the nanosponge in a equimolar ratio between the carbonyl group of the nanosponge and the cation of the salt.

The adsorbent material thus obtained is finally liofilized.

The same process has been used for the preparation of an adsorbent material with MgCl₂ and Mg(SO₄).

### Example 2

The nanosponge obtained as illustrated in Example 1 is mixed in solid phase in a weight ratio of 1:1 with MgCl₂ to obtain the adsorbent material.

The same process has been used for the preparation of an adsorbent material with CaCl₂ and Mg(SO₄).

### Example 3

1.135 g of β-cyclodextrin are dissolved in 10 mL of anidrous dimethylsulfoxide (DMSO). 2.7 mL of triethylamine are added to the solution and subsequently 1.74 g of pyromellitic anhydride are introduced. The solution becomes immediately viscous and temperature rises up to 45°C. The reaction continues for 24 h.

At termination, the solution is washed with a large excess of deionized water and then filtered under vacuum. The nanosponge thus obtained is recovered.

A solution of CaCl₂ in water is then mixed with the nanosponge in a equimolar ratio between the carbonyl group of the nanosponge and the cation of the salt.

The adsorbent material thus obtained is finally freeze-dried.

The same process has been used for the preparation of an adsorbent material with MgCl₂ and Mg(SO₄).

### Example 4

1.135 g of β-cyclodextrin are dissolved in 10 mL of anidrous DMF. Subsequently 1.74 g of toluene diisocyanate (TDI) are introduced and the solution reacts at 70°C under magnetic stirring.

After 40 minutes the viscosity of the solution raises rapidly and a solid block is obtained. After 24 h the reaction is stopped and a large excess of deionized water is added to the solid.

The solution is then filtered under vacuum and the solid nanosponge thus obtained is recovered.

The nanosponge is then mixed in solid phase in a weight ratio of 1:1 with CaCl₂ to obtain the adsorbent material.

The same process has been used for the preparation of an adsorbent material with MgCl₂ and Mg(SO₄).

### Example 5

### Adsorption evaluation

10 g of adsorbent material are weighted and disposed in a climate chamber at 23 °C and 40 % relative humidity (R.H.). The material is then saturated, checking periodically its weight (the measurements carried out within 1 hour must not differ more than 10 mg). The adsorption capacity (%) is calculated and indicated in Table 1.

**Table 1**

| **Samples** | Adsorption capacity (%) (at T= 23 °C /R.H. 40 %) |
|---|---|
| BNS Pyro 1.2.5-CaCl₂ (1:1 mixture) | 62 ± 2 |
| BNS Pyro 1.2.5- CaCl₂ (1:2 mixture) | 84 ± 2 |
| BNS Pyro 1.4-CaCl₂ (1:1 mixture) | 45 ± 2 |
| BNS Pyro 1.8-CaCl₂ (1:1 mixture) | 48 ± 2 |
| BNS Pyro 1.2.5-MgCl₂ (1:1 mixture) | 53 ± 2 |
| BNS Pyro 1.2.5-FeCl₃ (1:1 mixture) | 27 ± 2 |
| BNS Pyro 1.2.5-Mg(NO₃)₃ (1:1 mixture) | 17 ± 2 |
| BNS Pyro 1.2.5-MgSO₄ (1:1 mixture) | 16 ± 2 |
| BNS Pyro 1.4- MgSO₄ (1:1 mixture) | 35 ± 2 |
| BNS Pyro 1.2.5-NaOH (1:1 mixture) | 89 ± 2 |
| BNS Pyro 1.4-NaOH (1:1 mixture) | 48 ± 2 |
| BNS Pyro 1.2.5-KOH (1:1 mixture) | 30 ± 2 |
| BNS Pyro 1.4-CaO (1:1 mixture) | 30 ± 2 |

| | |
|---|---|
| BNS Pyro: nanosponge obtained from β-cyclodextrin cross-linked with pyromellitic anhydride. | |

Silicagel adsorption at a temperature of 23°C and with an R.H. of 40% is 22.98% while in the same conditions adsorption for bentonite is 18.54%.

As can be appreciated, the adsorbent material of the invention shows an increased percentage of adsorbed moisture with respect to both bentonite and silicagel. Moreover, after adsorption all the adsorbent material tested are solid, thus avoiding deliquescence.

Further, the adsorbent material comprising calcium oxide does not release hydroxyl ions, thus avoiding corrosion events.

## Claims

1. Adsorbent material comprising a carbohydrate nanosponge and at least one hygroscopic material.

2. Adsorbent material according to claim 1, **characterized in that** said carbohydrate nanosponge is obtained by polymerization of a carbohydrate selected from the group consisting of dextrins, cellulose and starch and a linking agent selected from the group consisting of carbonyldiimidazole, triphosgene, diphenylcarbonate, pyromellitic anhydride, di- and poly-isocyanates, bis-acrylamides, carboxylic acid chlorides and dialdehydes.

3. Adsorbent material according to any of claims 1 or 2, **characterized in that** said dextrin is selected from linear dextrins and cyclodextrins.

4. Adsorbent material according to any of claims 1 to 3, **characterized in that** said dextrin is β-cyclodextrin.

5. Adsorbent material according to any of claims 1 to 4, **characterized in that** said linking agent is pyromellitic anhydride.

6. Adsorbent material according to any of claims 1 to 5, **characterized in that** the molar ratio between said carbohydrate and said linking agent is between 2 and 16.

7. Adsorbent material according to claim 6, **characterized in that** the molar ratio between said carbohydrate and said linking agent is between 4 and 8.

8. Adsorbent material according to any of claims 1 to 7, **characterized in that** said hygroscopic material is selected from the group consisting of chlorides, nitrates, sulphates, oxides and hydroxides.

9. Adsorbent material according to claim 8, **characterized in that** said hygroscopic material is selected from the group consisting of calcium chloride, magnesium chloride, ferric chloride, copper chloride, calcium oxide, zinc oxide, sodium hydroxide, potassium hydroxide, calcium hydroxide, calcium nitrate, copper nitrate, zinc nitrate, magnesium nitrate, potassium nitrate, magnesium sulphate, sodium sulphate, calcium sulphate and ammonium sulphate.

10. Adsorbent material according to claims 8 or 9, **characterized in that** said hygroscopic material is selected from the group consisting of calcium chloride, magnesium chloride, ferric chloride, magnesium nitrate, magnesium sulphate, sodium hydroxide, potassium hydroxide and calcium oxide.

11. Adsorbent material according to claim 10, **characterized in that** said hygroscopic material is calcium chloride.

12. Adsorbent material according to any of claims 1 to 11, **characterized in that** the weight ratio of the carbohydrate nanosponge with respect to the hygroscopic material is between 1:8 and 8:1.

13. Adsorbent system comprising the adsorbent material according to any of claims 1 to 12.

14. Use of an adsorbent material according to any of claims 1 to 12 or of an adsorbent system according to claim 13 for adsorbing water or moisture.

15. Use of an adsorbent material according to claims 1 to 12 as additive in the production of packaging materials.
